# EUROPÄISCHE PATENTSCHRIFT

(11) **EP 1 627 611 B1**
(45) Veröffentlichungstag und Bekanntmachung des Hinweises auf die Patenterteilung: **21.10.2009**
(21) Anmeldenummer: 05017799.7
(22) Anmeldetag: 17.08.2005
(51) Int. Cl.: A61C 1/07

(54) **Medizinischer Handstückkopf zur Übertragung einer Hubbewegung auf ein Werkzeug**
Head for a medical handpiece for transmission of a reciprocating motion to a treatment tool
Tête pour une pièce à main médicale de transmission d'un mouvement va-et-vient à un outil de traitement

(30) Priorität: 18.08.2004 AT 13872004
(43) Veröffentlichungstag der Anmeldung: 22.02.2006
(73) Patentinhaber: W & H Dentalwerk Bürmoos GmbH, 5111 Bürmoos (AT)
(72) Erfinder: Brandstätter, Andreas, 5120 St. Pantaleon 208 (AT)

(56) Entgegenhaltungen:
- EP-A- 0 387 980
- EP-A- 0 577 981
- US-A- 3 578 745
- US-A- 4 295 827
- US-A- 4 976 625

## Beschreibung

Die vorliegende Erfindung betrifft einen Handstückkopf eines medizinischen Handstücks, das eine Hin- und Herbewegung (Hubbewegung) auf ein im Handstückkopf angeordnetes Werkzeug überträgt.

Mit derartigen Handstücken werden beispielsweise Feilen zur Präparation von Zähnen angetrieben. Um unterschiedliche Behandlungen durchführen bzw. die Feilen auch an schwer zugänglichen Stellen einsetzen zu können, ist es notwendig, daß der Anwender die Feile in zwei Modi betreiben kann: Zur Bearbeitung von Flächen soll die Feile gegenüber dem Handstück frei drehbar sein, so daß sie immer an der zu bearbeitenden Fläche anliegt. Bei Formarbeiten hingegen ist es notwendig, daß die Feile gegenüber dem Handstück fixiert ist, so daß nötigenfalls auch ein Drehmoment auf die Feile und das Werkstück ausgeübt werden kann. Bevorzugt soll in letzterem Fall die Feile in mehreren, unterschiedlichen Drehpositionen fixiert werden können.

Möchte ein Anwender beide Modi einsetzen, so benötigt er dazu gegenwärtig zwei Handstücke bzw. zwei auswechselbare Handstückköpfe, wobei jeweils ein Handstück(kopf) die Anwendung eines Modus erlaubt. Neben der finanziellen Belastung die die Anschaffung zweier Handstücke für den Anwender bedeutet, ist auch die Anwendung umständlich, da während der Behandlung die Handstücke ausgetauscht und an die Antriebe gekuppelt bzw. davon entkuppelt werden müssen. Auch müssen Pflege- und Reinigungsmaßnahmen der Handstücke oder der Handstückköpfe doppelt durchgeführt werden.

Die EP 577 981 A2 offenbart einen Handstückkopf für Feilen, der es dem Anwender ermöglicht beide Modi zu verwenden. Die Auswahl erfolgt über eine Verstelleinrichtung am oberen Ende des Kopfs, die über eine Verschiebekupplung mit der Positionierkupplung zur Einstellung der Drehposition der Feile in Verbindung steht. Die Positionierkupplung besteht aus zwei Ringen mit Zähnen, die ineinander greifen. Einer der beiden Ringe ist mit einer Feder vorgespannt.

Nachteilig bei diesem Handstückkopf ist, daß die Einstellung der Drehposition der Feile in Stufen, entsprechend den Zähnen der beiden Ringe, erfolgt, so daß der Anwender auf eine begrenzte Anzahl von Drehpositionen eingeschränkt ist. Weiters ist ein Wechsel von einem Modus in den anderen während der Behandlung nicht möglich, da hierzu die Verstelleinrichtung in axialer Richtung (bezogen auf die Längsachse der Feile) verschoben werden muß. Dazu benötigt der Anwender - neben der Hand die die Feile hält - eine zweite Hand, so daß die Behandlung unterbrochen und der Handstückkopf mit der Feile aus dem Mund herausgenommen werden muß. Schließlich ist der Konstruktions- und Montageaufwand des in der EP '981 beschriebenen Handstückkopfs mit seinen beiden Kupplungen sehr hoch.

Der vorliegenden Erfindung liegt daher die Aufgabe zugrunde mittels einer konstruktiv einfachen Lösung einen Handstückkopf zur Übertragung einer Hubbewegung auf ein Werkzeug so auszugestalten, daß die Feile sowohl frei drehbar als auch in jeder beliebigen Position fixierbar ist. Der Wechsel zwischen diesen beiden Modi soll bevorzugt mit einer Hand durchführbar sein, so daß die Behandlung nicht durch Herausnahme des Handstückkopfs aus der Mundhöhle unterbrochen werden muß.

Diese Aufgabe wird gemäß der vorliegenden Erfindung durch einen Handstückkopf mit den Merkmalen des Anspruchs 1 gelöst. Besonders vorteilhafte Ausführungsformen sind in den Unteransprüchen angeführt.

Erfindungsgemäß umfasst die Positioniervorrichtung des Handstückkopfs eine Klemmverbindung, die frei von vorgegebenen Rastpositionen ist, wodurch es dem Anwender ermöglicht wird die Werkzeugaufnahme, die in Wirkverbindung mit der Positioniervorrichtung steht, und eine darin angeordnetes Werkzeug in jeder beliebigen Position, i.e. stufenlos, zu fixieren.

Die Klemmverbindung besteht aus zwei zueinander komplementären Klemmteilen, besonders bevorzugt aus Klemmflächen, die als schiefe Ebenen ausgebildet sind. Ein erstes Klemmteil ist drehfest mit der um ihre Längsachse drehbaren Werkzeugaufnahme verbunden. Die beiden Klemmteile sind relativ zueinander beweglich und können zumindest eine erste und eine zweite Stellung einnehmen. In der ersten Stellung, die dem ersten Modus entspricht, kontaktieren die beiden Klemmteile einander nicht oder nur so wenig, daß die Werkzeugaufnahme und ein darin angeordnetes Werkzeug frei drehbar sind. In der zweiten Stellung, die dem zweiten Modus entspricht, kontaktieren die beiden Klemmteile einander, wobei die Klemmkraft zwischen den beiden Klemmteilen eine Rotation der Werkzeugaufnahme und eines darin angeordneten Werkzeugs unterbindet.

In einem weiteren bevorzugten Ausführungsbeispiel ist ein Klemmteil mit einem beweglichen Einstellglied, bevorzugt einem Schieber, verbunden, womit dem Anwender die Auswahl der ersten und zweiten Stellung der beiden Klemmteile erleichtert wird. Besonders bevorzugt ist das Einstellglied parallel zur Längsachse des Handstückkopfs verschiebbar, insbesondere mit einem Finger jener Hand, die den Handstückkopf während der Behandlung hält. Damit ist der Anwender nicht genötigt zur Änderung des Modus den Handstückkopf aus der Mundhöhle des Patienten herauszunehmen und die Behandlung zu unterbrechen.

Die Erfindung wird nachfolgend anhand eines bevorzugten Ausführungsbeispiels und Bezug nehmend auf die beigefügten Zeichnungen erläutert:
- Figur 1: zeigt einen erfindungsgemäßen gewinkelten Handstückkopf.
- Figur 2: zeigt einen erfindungsgemäßen gewinkelten Handstückkopf mit einer alternativen Ausführungsform des Einstellglieds.

Gleiche Bauteile sind in beiden Figuren mit den selben Ziffern beschriftet.

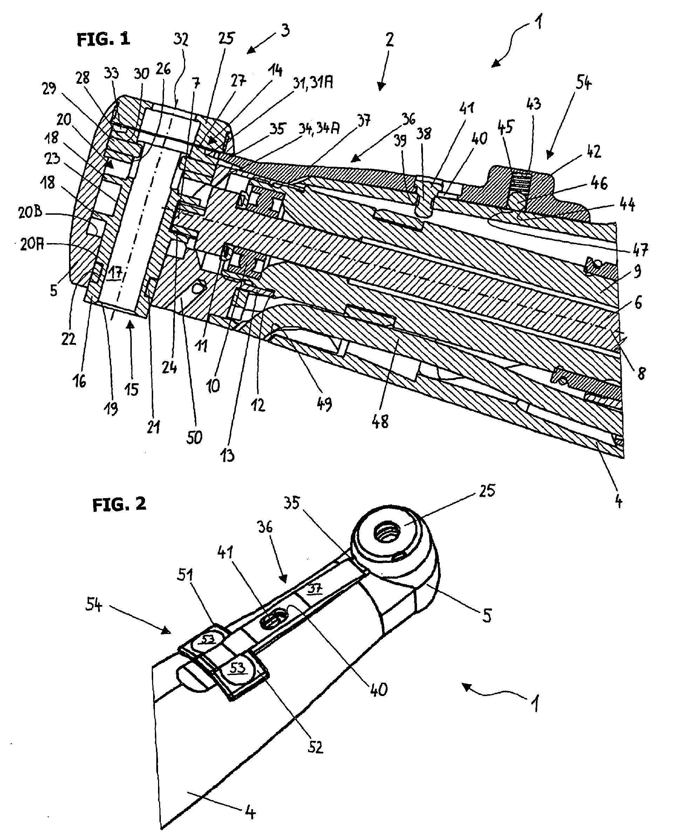

Der in Figur 1 dargestellte erfindungsgemäße gewinkelte Handstückkopf 1 kann sowohl als Wechselkopf ausgeführt sein, d.h. über eine Kupplung, bevorzugt eine Schnellkupplung, an eine Griffhülse eines medizinischen Handstücks anschließbar sein, als auch als distaler Teil eines einstückigen medizinischen Handstücks.

Der Handstückkopf 1 besteht aus einem Halsabschnitt 2 und einem Kopfabschnitt 3 mit jeweiligen Außenhülsen 4, 5. Eine Antriebswelle 6, die von einem Motor (nicht dargestellt) in Rotation versetzt wird, durchsetzt den Halsabschnitt 2. Die Antriebswelle 6 endet distal in einem Exzenterzapfen 7, der exzentrisch versetzt zur Längsachse 8 der Antriebswelle 6 angeordnet ist. Die Antriebswelle 6 ist von einer Lagerhülse 9 umgeben, in der sich die Wälzlager (nur ein Wälzlager 10 ist sichtbar) zur Lagerung der Antriebswelle 6 befinden. Eine Federscheibe 11 spannt das Wälzlager 10 gegen die Antriebswelle 6 und die Lagerhülse 9 vor. Über eine Schulter 12 an der Außenseite der Lagerhülse 9 wird diese an einem Fortsatz 13 der Außenhülse 5 des Kopfteils 3 gelagert.

Die Werkzeugaufnahme 15 des Handstückkopfs 1 besteht aus einer zylindrischen Hülse 16 mit einer zentralen Bohrung 17, in die das Werkzeug, bevorzugt eine Feile, durch die Aufnahmeöffnung 19 gesteckt wird. An der Außenseite der Hülse 16 sind zwei Flansche 18 angeordnet. Die Werkzeugaufnahme 15 ist in der Außenhülse 5 des Kopfteils 3 gleitend gelagert. Zur Aufnahme der Werkzeugaufnahme 15 weist der Kopfteil 3 eine Lagerbohrung 20 auf, deren Durchmesser im Abschnitt 20 A nur geringfügig größer ist als der Durchmesser der Werkzeugaufnahme 15. Zur Verhinderung des Eindringens von Behandlungsflüssigkeit, Gewebepartikeln oder sonstigen Verschmutzungen weist die Werkzeugaufnahme 15 im Abschnitt 20 A der Lagerbohrung 20 eine Nut 22 auf, in die eine Dichtung 21, bevorzugt ein Dichtring, eingesetzt ist, die auch während des Betriebs kontinuierlich die Wand des Abschnitts 20 A kontaktiert und das Innere des Handstückkopfs 1 gegen die Umgebung abdichtet. Abschnitt 20 B der Lagerbohrung 20 ist so bemessen, daß darin die Flansche 18 mit ihren größeren Durchmessern Aufnahme finden.

Die beiden Flansche 18 bilden eine Ringnut 23, in die der Exzenterzapfen 7 und eine diesen umgebende Lagerhülse 24, die als Gleitlager dient, eingreifen. Bei Rotation der Antriebswelle 6 durchläuft der Exzenterzapfen 7 eine Kreisbewegung, die in bekannter Weise durch die Flansche 18 und die gleitende Lagerung der Werkzeugaufnahme 15 in eine Hin- und Herbewegung (Hubbewegung) der Werkzeugaufnahme 15 und eines darin angeordneten Werkzeugs umgewandelt wird. Die Höhe des Abschnitts 20B der Lagerbohrung 20 ist dabei so bemessen, daß die Hubbewegung der Werkzeugaufnahme 15 nicht behindert wird.

Zwischen der Verschlußkappe 25 und der Hülse 16 ist ein Distanzring 27 angeordnet, der mit einem Flansch 28 verbunden ist. Distanzring 27 mit Flansch 28 ist mit der Hülse 16 durch zwei Stifte 29, die in zwei Langlöcher 26 der Hülse 16 eingreifen, drehfest verbunden. Die Stifte 29 sind in zwei Bohrungen 30 des Distanzrings 27 eingepreßt. Die Länge der beiden Langlöcher 26 ist wiederum so bemessen, daß sie die Hubbewegung der Werkzeugaufnahme 15 nicht behindern. Flansch 28 weist ein erstes Klemmteil 31, i.e. eine Fläche 31 A auf, die als schiefe Ebene ausgebildet ist, wodurch der Flansch 28 eine sich radial (bezogen auf die Längsachse 32 der Werkzeugaufnahme 15) nach außen verjüngenden, keilförmige Form aufweist.

Flansch 28, Distanzring 27 und Verschlusskappe 25 als drehfestes Bauteil des Handstückkopfs 1 bilden eine Aussparung 33, die aufgrund der als schiefe Ebene ausgebildeten Fläche 31 A ebenfalls einen keilförmigen, sich radial nach innen verjüngende Form hat. In unmittelbarer Nähe zum ersten Klemmteil 31 ist als Teil eines Fortsatzes 35 ein zweites Klemmteil 34, i.e. eine Fläche 34 A, die ebenfalls als schiefe Ebene ausgebildet ist, angeordnet. Klemmteil 34 mit Fläche 34 A ist gegenüber Klemmteil 31 mit Fläche 31 A beweglich ausgebildet und kann zumindest eine erste und eine zweite Stellung einnehmen. In der in Figur 1 dargestellten ersten Stellung kontaktieren die beiden Klemmteile 31, 34 einander nicht oder nur so wenig, daß die Werkzeugaufnahme 15 und ein darin angeordnetes Werkzeug um die Achse 32 frei drehbar sind. Der keilförmige, sich verjüngende Fortsatz 35 greift hierbei im wesentlichen nicht in die Aussparung 33 ein. Bei Einnahme der zweiten Stellung wird der Fortsatz 35 mit dem Klemmteil 34 in Richtung des Kopfteils 3 (entspricht in Figur 1 einer Bewegung nach links) verschoben, bis der Fortsatz 35 in die Aussparung 33 ragt, die beiden Flächen 31 A, 34 A einander kontaktieren und die Klemmkraft zwischen den beiden Klemmteilen 31, 34 eine Rotation des Distanzrings 27, der mit dem Ring 27 drehfest verbundenen Werkzeugaufnahme 15 und eines darin angeordneten Werkzeugs verhindern. Durch diese als Klemmverbindung ausgeführte Positioniervorrichtung 14, die frei von vorgegebenen Rastpositionen ist, kann das Werkzeug, bevorzugt eine Feile, in jeder beliebigen Position fixiert werden.

Fortsatz 35 mit Klemmteil 34 ist zur Erleichterung des Verschiebevorgangs mit einem Einstellglied 36, bevorzugt in Form eines Schiebers 37, verbunden. Schieber 37 ist mittels eines Fixierelements, bevorzugt einer Schraube 38, die in einer Bohrung 39 der Außenhülse 4 eingeschraubt ist, mit dem Handstückkopf 1 verbunden. Der Kopf 41 der Schraube 38 ist in einem Langloch 40 aufgenommen, dessen Breite geringer, dessen Längsausdehnung jedoch größer als der Durchmesser des Schraubenkopfs 41 ist, wodurch der Schieber 37 entlang der Längsachse 8 des Handstückkopfs 1 verschiebbar ist.

Am proximalen Ende ist der Schieber 37 mit einer Bedienvorrichtung 54 in Form eines Vorsprungs 42 verbunden, die dem Anwender als bevorzugte Angriffsfläche für das Einstellglied 36 dient. Mit Hilfe der Bedienvorrichtung 54 kann der Anwender das Einstellglied 36 mit jener Hand, die den Handstückkopf 1 hält verschieben, ohne dabei den Handstückkopf 1 aus der Mundhöhle herausnehmen und die Behandlung unterbrechen zu müssen. Im Inneren des Vorsprungs 42 befindet sich eine Bohrung 43, deren Öffnung 44 der Außenhülse 4 zugewandt ist. Im Inneren der Bohrung 43 sind ein Federelement 45 und ein Rastelement, bevorzugt eine Kugel 46, aufgenommen. Wird das Einstellglied 36 verschoben, so daß die Klemmteile 31, 34 die zweite Stellung einnehmen und die Werkzeugaufnahme 15 fixieren, so wird auch die Kugel 46 mitverschoben und rastet aufgrund der durch das Federelement 45 ausgeübten Kraft in der Vertiefung 47 ein. Damit wird verhindert, daß die beiden Klemmteile 31, 34 sich während der Behandlung ungewollt voneinander entfernen und die drehfest fixierte Werkzeugaufnahme 15 sich aus ihrer Position löst. Wählt der Anwender die erste Stellung (freie Drehbarkeit der Werkzeugaufnahme 15), so schiebt er mit dem Einstellglied 36 das Rastelement 46 gegen die Kraft des Federelements 45 aus der Vertiefung 47.

Zum Ausleuchten der Behandlungsstelle ist im Handstückkopf 1 ein Lichtleiter 48 angeordnet, dessen distales Ende zur Abgabe des Lichtes in einer Öffnung 49 mündet. Über einen Spraykanal 50, der in der Nähe der Werkzeugaufnahme 15 mündet, wird Behandlungsflüssigkeit auf das Werkzeug und die Behandlungsstelle abgegeben. Lichtleiter 48 und Spraykanal 50 verlaufen in bekannter Weise durch den Handstückkopf 1 oder das Handstück und sind mit jeweiligen Medienquellen verbunden.

Figur 2 zeigt den erfindungsgemäßen Handstückkopf 1 in perspektivischer Darstellung. Aufbau und Funktion der als Klemmverbindung ausgeführten Positioniervorrichtung für das Werkzeug entsprechen Figur 1.

Anders als bei dem Handstückkopf 1 aus Figur 1 wird die Bedienvorrichtung 54 am proximalen Ende des als Schieber 37 ausgeführten Einstellglieds 36 von zumindest einem seitlich angeordneten Flügeln 51 oder 52 gebildet. Dadurch wird die Bedienung des Handstückkopfs 1 noch komfortabler: Während der Behandlung hält der Anwender den Handstückkopf 1 wie einen Kugelschreiber zwischen den Fingern, d.h. der Mittelfinger dient als Auflage für den Handstückkopf 1, Zeigefinger und Daumen stabilisieren den Handstückkopf 1 seitlich. Durch die seitlich angeordneten Flügel 51, 52, die bevorzugt leichte Vertiefungen 53 für eine Fingerkuppe, gegebenenfalls mit einer Oberflächenstruktur, aufweisen, wird dem Anwender das Verschieben des Einstellglieds 36 entlang der Längsachse 8 des Handstückkopfs 1 ohne Unterbrechung der Behandlung weiter erleichtert. Da der Verschiebevorgang bevorzugt mit dem Zeigefinger durchgeführt wird, ist es vorteilhaft an beiden Seiten des Schiebers 37 einen Flügel 51, 52 anzuordnen, wodurch der Handstückkopf 1 universell für Rechts- und Linkshänder zu verwenden ist.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäßen Funktionsprinzip der Erfindung nicht verändern.

## Patentansprüche

1. Handstückkopf (1) eines medizinischen Handstücks mit einer Außenhülse (3, 4), mit einer darin gelagerten, um ihre Längsachse (32) drehbaren und in eine Hubbewegung versetzbaren Werkzeugaufnahme (15), und mit einer mit der Werkzeugaufnahme (15) zusammenwirkenden Positioniervorrichtung (14), die zwischen einer ersten und einer zweiten Stellung bewegbar ist, wobei in der ersten Stellung die Werkzeugaufnahme (15) und ein darin angeordnetes Werkzeug frei drehbar sind und in der zweiten Stellung die Drehposition eines in der Werkzeugaufnahme (15) angeordneten Werkzeugs fixiert ist, **dadurch gekennzeichnet, dass**
die Positioniervorrichtung (14) eine Klemmverbindung umfasst, die frei von vorgegebenen Rastpositionen ist, wobei die Klemmverbindung komplementär zueinander ausgebildete Klemmteile (31, 34) aufweist, die relativ zueinander verschiebbar sind.

2. Handstückkopf (1) nach Anspruch 1, **dadurch gekennzeichnet, dass**
die Klemmteile (31, 34) im Wesentlichen radial zur Längsachse (32) der Werkzeugaufnahme (15) verlaufen.

3. Handstückkopf (1) nach einem der vorhergehenden Ansprüche, **dadurch gekennzeichnet, dass**
die beiden Klemmteile (31, 34) komplementäre Klemmflächen (31 A, 34 A) umfassen, die bevorzugt als schiefe Ebenen ausgebildet sind.

4. Handstückkopf (1) nach einem der vorhergehende Ansprüche, **dadurch gekennzeichnet, dass**
ein Klemmteil (31) drehfest mit der Werkzeugaufnahme (15) verbunden ist.

5. Handstückkopf (1) nach einem der vorhergehenden Ansprüche, **dadurch gekennzeichnet, dass**
die Klemmverbindung einen Distanzring (27) aufweist, der drehfest mit der Werkzeugaufnahme (15) verbunden ist und der die Werkzeugaufnahme (15) umgibt.

6. Handstückkopf (1) nach Anspruch 5, **dadurch gekennzeichnet, dass**
der Distanzring (27) mit der Werkzeugaufnahme (15) durch zwei Stifte (29) verbunden ist, die in zwei Langlöchern (26) der Werkzeugaufnahme (15) eingreifen.

7. Handstückkopf (1) nach Anspruch 5 oder 6, **dadurch gekennzeichnet, dass**
der Distanzring (27) einen Flansch (28) aufweist, an dem ein Klemmteil (31) vorgesehen ist.

8. Handstückkopf (1) nach Anspruch 7, **gekennzeichnet durch**
einen sich verjüngenden, keilförmigen Flansch (28).

9. Handstückkopf (1) nach einem der vorhergehenden Ansprüche, **dadurch gekennzeichnet, dass**
ein Klemmteil (34) gegenüber dem anderen Klemmteil (31) verschiebbar angeordnet ist.

10. Handstückkopf (1) nach Anspruch 9, **dadurch gekennzeichnet, dass**
das verschiebbar angeordnete Klemmteil (34) mit einem beweglichen Einstellglied (36), bevorzugt einem Schieber (37), verbunden ist.

11. Handstückkopf (1) nach Anspruch 10, **dadurch gekennzeichnet, dass**
das Einstellglied (36) entlang der Längsachse (8) des Handstückkopfs (1) verschiebbar ist.

12. Handstückkopf (1) nach Anspruch 10 oder 11, **dadurch gekennzeichnet, dass**
das Einstellglied (36) mit einer Bedienvorrichtung (54) verbunden ist.

13. Handstückkopf (1) nach Anspruch 12, **dadurch gekennzeichnet, dass**
die Bedienvorrichtung (54) seitlich des Einstellglieds (36) angeordnet und bevorzugt durch zumindest einen Flügel (51, 52) gebildet ist.

14. Handstückkopf (1) nach einem der vorhergehenden Ansprüche, **dadurch gekennzeichnet, dass**
bei Einnahme der zweiten Stellung der Positioniervorrichtung (14) der beweglich angeordnete Klemmteil (34) in eine vom Flansch (28), dem Distanzring (27) und einem drehfesten Bauteil des Handstückkopfs (1) gebildete Aussparung (33) eingreift.

15. Handstückkopf (1) nach Anspruch 14, **dadurch gekennzeichnet, dass**
das drehfeste Bauteil ein Teil der Außenhülse (3) umfasst, bevorzugt die Verschlusskappe (25) des Handstückkopfs (1).

## Claims

1. Handpiece head (1) of a medical handpiece having an outer sleeve (3, 4), a tool receptacle (15) mounted therein that can rotate about its longitudinal axis (32) and can be induced to a reciprocating movement, and a positioning device (14) which cooperates with the tool receptacle (15) and is movable between a first position and a second position, such that in the first position, the tool receptacle (15) and a tool disposed therein are freely rotatable, and in the second position, the rotational position of a tool placed in the tool receptacle (15) is fixed, **characterized in that**
the positioning device (14) comprises a clamping connection which is free of predefined catch positions, wherein the clamping connection has clamping parts (31, 34) designed to be complementary to one another and displaceable relative to one another.

2. The handpiece head (1) according to claim 1, **characterized in that**
the clamping parts (31, 34) run essentially radially to the longitudinal axis (32) of the tool receptacle (15).

3. The handpiece head (1) according to any one of the preceding claims, **characterized in that**
the two clamping parts (31, 34) comprise complementary clamping faces (31 A, 34 A) which are preferably designed as inclined planes.

4. The handpiece head (1) according to any one of the preceding claims, **characterized in that**
a clamping part (31) is connected to the tool receptacle (15) in a rotationally fixed manner.

5. The handpiece head (1) according to any one of the preceding claims, **characterized in that**
the clamping connection has a spacer ring (27), which is connected to the tool receptacle (15) in a rotationally fixed manner and surrounds the tool receptacle (15).

6. The handpiece head (1) according to claim 5, **characterized in that**
the spacer ring (27) is connected to the tool receptacle (15) by two pins (29), which engage in two elongated holes (26) in the tool receptacle (15).

7. The handpiece head (1) according to claim 5 or 6, **characterized in that**
the spacer ring (27) has a flange (28) on which a clamping part (31) is provided.

8. The handpiece head (1) according to claim 7, **characterized by**
a tapering wedge-shaped flange (28).

9. The handpiece head (1) according to any one of the preceding claims, **characterized in that**
a clamping part (34) is displaceably disposed with respect to the other clamping part (31).

10. The handpiece head (1) according to claim 9, **characterized in that**
the displaceably disposed clamping part (34) is connected to a movable adjusting member (36), preferably a slide (37).

11. The handpiece head (1) according to claim 10, **characterized in that**
the adjusting member (36) is displaceable along the longitudinal axis (8) of the handpiece head (1).

12. The handpiece head (1) according to claim 10 or 11, **characterized in that**
the adjusting member (36) is connected to an operating device (54).

13. The handpiece head (1) according to claim 12, **characterized in that**
the operating device (54) is disposed at the side of the adjusting member (36) and is preferably formed by at least one wing (51, 52).

14. The handpiece head (1) according to any one of the preceding claims, **characterized in that**
on assuming the second position of the positioning device (14), the movably disposed clamping part (34) engages in a recess (33) formed by the flange (28), the spacer ring (27) and a rotationally fixed component of the handpiece head (1).

15. The handpiece head according to claim 14, **characterized in that**
the rotationally fixed component comprises a part of the outer sleeve (3), preferably the closing cap (25) of the handpiece head (1).

## Revendications

1. Tête de pièce à main (1) d'une pièce à main médicale, avec une douille extérieure (3, 4), avec un support d'outil (15) logé dans cette dernière, rotatif autour de son axe longitudinal (32) et susceptible de se déplacer en levée et avec un dispositif de positionnement (14) coopérant avec le support d'outil (15) qui est mobile entre une première et une deuxième position, dans la première position, le support d'outil (15) et un outil disposé dans ce dernier étant librement rotatifs et dans la deuxième position, la position de rotation d'un outil disposé dans le support d'outil (15) étant fixée, **caractérisée en ce que**
le dispositif de positionnement (14) comprend un accouplement de serrage, qui est libre de positions d'enclenchement prédéfinies, l'accouplement de serrage comportant des éléments de serrage (31, 34) conçus de façon complémentaire l'un à l'autre, qui sont déplaçables l'une par rapport à l'autre.

2. Tête de pièce à main (1) selon la revendication 1, **caractérisée en ce que** les éléments de serrage (31, 34) s'étendent de façon sensiblement radiale à l'axe longitudinal (32) du support d'outil (15) .

3. Tête de pièce à main (1) selon l'une quelconque des revendications précédentes,
**caractérisée en ce que**
les deux éléments de serrage (31, 34) comprennent des surfaces de serrage complémentaires (31 A, 34 A) qui sont conçues de préférence sous la forme de plans inclinés.

4. Tête de pièce à main (1) selon l'une quelconque des revendications précédentes,
**caractérisée en ce que**
un élément de serrage (31) est relié de façon solidaire en rotation avec le support d'outil (15).

5. Tête de pièce à main (1) selon l'une quelconque des revendications précédentes,
**caractérisée en ce que**
l'accouplement de serrage comporte une bague d'écartement (27) qui est reliée de façon solidaire en rotation avec le support d'outil (15) et qui entoure le support d'outil (15).

6. Tête de pièce à main (1) selon la revendication 5, **caractérisée en ce que**
la bague d'écartement (27) est reliée au support d'outil (15) par deux chevilles (29) qui s'engagent dans deux trous oblongs (26) du support d'outil (15) .

7. Tête de pièce à main (1) selon la revendication 5 ou 6, **caractérisée en ce que**
la bague d'écartement (27) comporte une bride (28) sur laquelle est prévu un élément de serrage (31).

8. Tête de pièce à main (1) selon la revendication 7, **caractérisée par**
une bride (28) cunéiforme se rétrécissant.

9. Tête de pièce à main (1) selon l'une quelconque des revendications précédentes,
**caractérisée en ce que**
un élément de serrage (34) est disposé en étant déplaçable par rapport à l'autre élément de serrage (31).

10. Tête de pièce à main (1) selon la revendication 9, **caractérisée en ce que**
l'élément de serrage (34) disposé en étant déplaçable est relié à un organe de réglage mobile (36), de préférence à un curseur (37).

11. Tête de pièce à main (1) selon la revendication 10, **caractérisée en ce que**
l'organe de réglage (36) est déplaçable le long de l'axe longitudinal (8) de la tête de pièce à main (1).

12. Tête de pièce à main (1) selon la revendication 10 ou 11, **caractérisée en ce que**
l'organe de réglage (36) est relié à un dispositif de manoeuvre (54).

13. Tête de pièce à main (1) selon la revendication 12, **caractérisée en ce que**
le dispositif de manoeuvre (54) est disposé latéralement par rapport à l'organe de réglage (36) et formé de préférence par au moins une ailette (51, 52).

14. Tête de pièce à main (1) selon l'une quelconque des revendications précédentes,
**caractérisée en ce que**
à l'adoption de la deuxième position du dispositif de positionnement (14), l'élément de serrage disposé en étant mobile (34) s'engage dans une encoche (33) formée par la bride (28), la bague d'écartement (27) et un élément solidaire en rotation de la tête de pièce à main (1).

15. Tête de pièce à main (1) selon la revendication 14, **caractérisée en ce que**
l'élément solidaire en rotation comprend une partie de la douille extérieure (3), de préférence le capuchon de fermeture (25) de la tête de pièce à main (1).
